## Europäisches Patentamt

(19) **European Patent Office**

**Office européen des brevets**

(11) Veröffentlichungsnummer : **0 316 564 B1**

(12) # EUROPÄISCHE PATENTSCHRIFT

(45) Veröffentlichungstag der Patentschrift :
28.08.91 Patentblatt 91/35

(51) Int. Cl.⁵ : **G01F 23/28, G01F 23/04**

(21) Anmeldenummer : 88116633.4

(22) Anmeldetag : 07.10.88

(54) Füllstandsanzeiger.

Teilanmeldung 90118569.4 eingereicht am 07/10/88.

(30) Priorität : 13.11.87 DE 3738515

(43) Veröffentlichungstag der Anmeldung :
24.05.89 Patentblatt 89/21

(45) Bekanntmachung des Hinweises auf die
Patenterteilung :
28.08.91 Patentblatt 91/35

(84) Benannte Vertragsstaaten :
DE FR GB IT

(56) Entgegenhaltungen :
DE-A- 2 839 634
DE-A- 3 002 118
US-A- 3 975 958

(73) Patentinhaber : ROBERT BOSCH GmbH
Postfach 10 60 50
W-7000 Stuttgart 10 (DE)

(72) Erfinder : Dukart, Anton
Sparbenhecke 14D
W-6729 Wörth 2 (DE)
Erfinder : Hauler, Peter
Merkurweg 4
W-7505 Ettlingen 5 (DE)
Erfinder : Zabler, Erich, Dr.
Brunhildstrasse 11
W-7513 Stutensee 1 (DE)

## Beschreibung

Die Erfindung betrifft einen Füllstandsanzeiger der im Anspruch 1 angegebenen Art. Aus der DE-A1 2839634 ist ein Füllstandsanzeiger bekannt, dessen physikalisches Prinzip auf einer direkten und indirekten Messung der Schallgeschwindigkeit von Lambwellen in Abhängigkeit von der vorhandenen Füllstandshöhe beruht. Dabei wird abhängig von der Phasenbeziehung der Tambwellen zwischen Sender und Empfänger auf die Füllstandshöhe geschlossen. Die dort verwendete Schutzhülse hat ausschließlich Schutzfunktionen, um eine robuste Ausführungsform zu ermöglichen. Die Schutzhülse soll das eigentliche Meßgerät vor aggressiven Flüssigkeiten schützen. Die eindeutige Zuordnung eines Meßsignals wird durch eine Veränderung der Frequenz und durch eine Veränderung des Abstandes zwischen Sender und Empfänger angestrebt.

Beim Füllstandssensor nach der Entgegenhaltung DE-A1-3002118 werden von einem Sender in einen Übertragungskörper Schallwellen eingespeist. Hierzu wird aber ein anderer physikalischer Effekt ausgewertet. Der Empfänger erfaßt die durch die unterschiedliche Füllstandshöhe hervorgerufene Amplituden- bzw. Leistungsänderung der Schwingungen. Das Meßprinzip beruht hier darauf, daß die Übertragung von Ultraschallwellen in einem Leiter abnimmt, wenn dieser Leiter in eine Flüssigkeit eintaucht. Je höher dabei die Füllstandshöhe ist, desto geringer ist die am Empfänger ankommende Leistung der Ultraschallwellen. Ferner existiert eine Grenzfrequenz, über der das bei diesem Gegenstand verwendete Meßprinzip auftritt, während eine Beeinflussung der Phasengeschwindigkeit nur unter dieser Grenzfrequenz auftritt

Ferner ist es bekannt, mit Hilfe des Echolotverfahrens oder einer Reflexion des Schalls an der Grenzschicht des zu bestimmenden Mediums die Füllstandshöhe zu ermitteln. Diese Füllstandsanzeiger sind aber nur schwer für bei Kraftfahrzeugen verwendeten unregelmäßigen Tankformen verwendbar. Auch bauen sie aufwendig und teuer und sind durch an der Wand reflektierte Echos ungenau und störanfällig.

## Vorteile der Erfindung

Der erfindungsgemäße Füllstandsanzeiger mit den Merkmalen des Anspruchs 1 hat demgegenüber den Vorteil, daß das Meßsignal eindeutig einer Füllstandshöhe zugeordnet werden kann. Durch inhomogene Beschichtung des Festkörpers oder durch inhomogene Zusammensetzung des Festkörpers aus Materialien unterschiedlicher Schallimpedanz Z (Schalleitfähigkeit) kann die Kennlinie leicht beeinflußt werden. Besonders im Bereich des sogenannten Restbereichs (Reservebereich) kann der Meßbereich aufgespreizt werden, um eine genaue Bestimmung der Restmenge zu ermöglichen. Der Schall wird in einem Festkörper geleitet, so daß durch entsprechende Verbiegung des Festkörpers der Füllstandsanzeiger leicht an beliebige Tankformen anpaßbar ist. Der Füllstandsanzeiger bestimmt zuverlässig und störsicher bei einer hohen Auflösung und einem großen Meßeffekt die Füllstandshöhe. Es werden keine mechanisch bewegten Teile verwendet. Der Füllstandsanzeiger weist eine kurze Meßzeit auf, die nur durch die Laufzeit des Schalls ($t \leq 1$ ms) bestimmt wird. Da der Festkörper mit piezoelektrischen Resonanzschwingern angeregt wird, hat er eine geringe Leistungsaufnahme.

Durch die in den Unteransprüchen aufgeführten Maßnahmen sind vorteilhafte Weiterbildungen des im Anspruch 1 angegebenen Füllstandsanzeigers möglich.

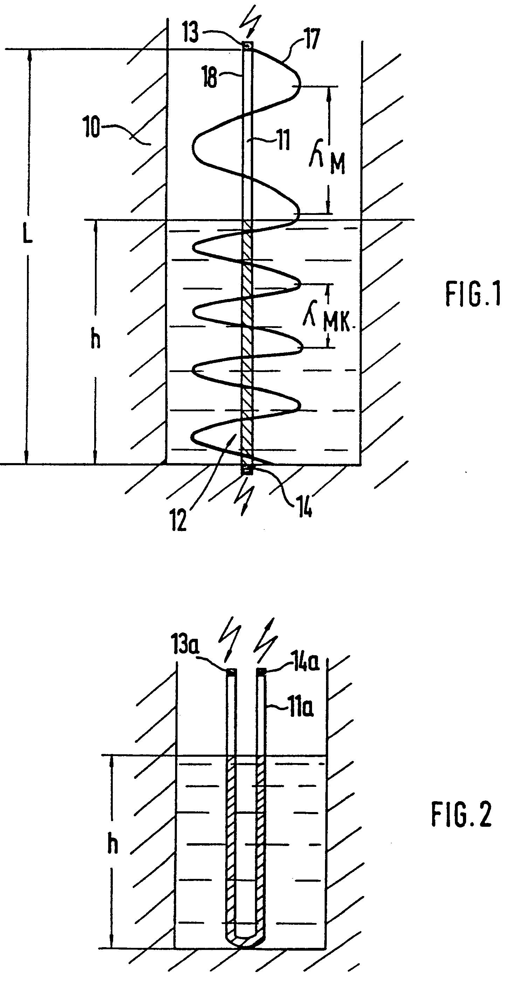

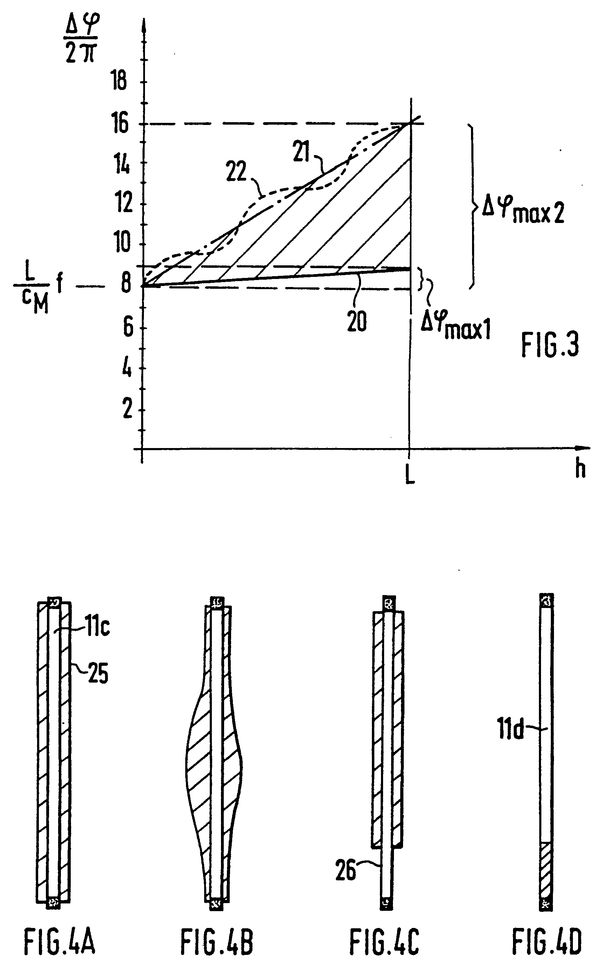

Ausführungsbeispiele der Erfindung sind in den Zeichnungen dargestellt und in der nachfolgenden Beschreibung näher erläutert. Es zeigen Figur 1 eine Ausgestaltung eines Füllstandsanzeigers im Längsschnitt, Figur 2 eine Abwandlung nach Figur 1, Figur 3 ein Diagramm des Phasenhubs $\Delta \varphi$ über die Füllstandshöhe h und die Figuren 4a bis d verschiedene Abwandlungen des Übertragungskörpers.

In Figur 1 ist mit 10 der Tank für den Kraftstoff eines Kraftfahrzeugs bezeichnet, in den ein Schalleiter 11 eines Füllstandsanzeigers 12 für die Kraftstoffmenge in den Tank 10 ragt. Der Schalleiter 11 weist an seinem oberen Ende einen Sender 13, z.B. piezoelektrischen Resonanzschwinger, und an seinem unteren, sich am Boden des Tanks 10 befindlichen Ende einen Empfänger 14 auf. Der Sender 13 ist als Schwinger für insbesondere Ultraschallwellen ausgebildet und soll sich über der maximalen Füllhöhe L des Tanks 10 befinden, so daß er nicht in den Kraftstoff hineinragt. Die effektive Füllhöhe des Kraftstoffs im Tank 10 ist mit h bezeichnet.

Wie in Figur 2 dargestellt, ist auch eine U-förmige Ausbildung des Schalleiters 11a möglich. Dadurch ergibt sich bei doppelter Stablänge auch die doppelte Eintauchtiefe und somit die doppelte Laufzeit des Schalls. Der Sender 13a und der Empfänger 14a sind beide an den Enden des Schalleiters 11a angeordnet, so daß sich beide im Bereich oberhalb des maximalen Flüssigkeitspegels befinden. Der Sender 13a und der Empfänger 14a können dann sehr einfach zu einer Einheit zusammengefaßt werden. Ferner ist es auch möglich, die Form des Schalleiters an die Form des Tanks anzupassen.

Vom Sender 13 werden im Schalleiter 11 Schallwellen 17, sogenannte Lambwellen, d.h. Oberflächenwellen im Bereich des Schalleiters 11, angeregt, deren Fortpflanzungsgeschwindigkeit im Bereich der Füllhöhe h des Kraftstoffs wesentlich kleiner ist als im von der Luft umgebenden Bereich L-h des Schalleiters 11. Die Schallwellen 17 treten, wie in Figur 1 dargestellt, an den Übergangsflächen 18 mit diesen jeweils umgebenden Medium in Kontakt. Die Beeinflussung der Fortpflanzungsgeschwindigkeit der Schallwellen 17 bestimmt sich nach der Größe der Übergangsfläche 18 und ist abhängig vom Verhältnis der Querschnittsfläche zum Umfang des Schalleiters 11. An Schalleitern 11, deren Umfang im Verhältnis zur Querschnittsfläche größer ist, wie z.B. bei Vierkantmaterial, wird die Fortpflanzungsgeschwindigkeit der Schallwellen mehr verändert als z.B. bei einem Rundmaterial. Das Verhältnis der Schallimpedanz Z im Schalleiter 11 zur Schallimpedanz Z im umgebenden Medium bestimmt die Veränderung der Fortpflanzungsgeschwindigkeit. Je größer die Schallimpedanz Z des Schalleiters 11 gegenüber dem des Mediums ist, desto geringer wird die Fortpflanzungsgeschwindigkeit im Schalleiter beeinflußt. Die Schallimpedanz Z für übliche als Schalleiter verwendete Materialien und deren umgebende Medien ist in folgender Tabelle dargestellt :

| Material | Z (M Pa/m/S) |
|---|---|
| Aluminium (Al) | 17,064 |
| Kupfer (Cu) | 41,830 |
| Stahl (St 37) | 46,472 |
| Wasser | 1,480 |
| Plexiglas | 3,22 |
| Luft | 0,00331 |
| Kraftstoff (Super) | 0,841 |

$$Z = c \cdot x$$

$c$ = Geschwindigkeit der Schallwellen

$x$ = spezifische Dichte

$Z$ = Schallimpedanz

Es ist ersichtlich, daß das Medium Luft die Fortpflanzungsgeschwindigkeit der Schallwellen 17 fast nicht beeinflußt. Hingegen wird die Fortpflanzungsgeschwindigkeit der Schallwellen 17 im Bereich der Füllhöhe h beim Medium Wasser um einen Faktor von ca. 1,5 verringert. Die vom Sender 13 ausgestrahlten Schallwellen 17 werden somit beim Eintauchen des Schalleiters 11 in die Flüssigkeit, d.h. im Bereich h, gegenüber dem uneingetauchten Zustand, d.h. im Bereich L-h verzögert, so daß am Empfänger 14 ein entsprechend der Verzögerung der Schallwellen 17 ein phasenverschobenes Signal meßbar ist. Diese Phasenverschiebung setzt sich additiv aus einem von der Füllhöhe h abhängigen und einem davon unabhängigen Term zusammen :

$$\Delta\varphi = \left(\frac{L-h}{c_M} + \frac{h}{c_{MK}}\right) \cdot \omega$$

$$= \frac{L}{c_M}\omega + \frac{h \cdot \omega}{c_M} \cdot \left(\frac{c_M}{c_{MK}} - 1\right)$$

$L$      = maximale Höhe des Schalleiters
$h$      = Füllstandshöhe
$\Delta\varphi$      = Phasenverschiebung
$c_M$      = Geschwindigkeit der Schallwellen über dem Medium im Bereich L-h, z.B. in Luft
$c_{MK}$      = Geschwindigkeit der Schallwellen des Mediums, dessen Füllhöhe h bestimmt werden soll
$\omega$      = Kreisfrequenz der Schallwellen

Der maximal mögliche Phasenhub $\varphi_{max}$, d.h. die maximal mögliche Phasenverschiebung zwischen minimaler und maximaler Füllhöhe h, also bei h = 0 und bei h = L, tritt umso stärker in Erscheinung als sich die Schallgeschwindigkeit des eingetauchten Abschnitts des Übertragungskörpers 11 von der Schallgeschwindigkeit des übrigen Abschnitts, des sich in Luft befindlichen unterscheidet. Bei einer maximalen Füllstandshöhe L von ca. 80 cm kann es aber vorkommen, daß sich eine Phasenverschiebung von mehreren Vollwinkeln, d.h. mehrmals um 2 π, ergibt. Dadurch ist keine eindeutige Zuordnung des Meßsignals zu einer bestimmten Füllstandshöhe h mehr möglich. In Figur 3 ist der entsprechende Verlauf der Phasenverschiebung Δ φ über der Füllhöhe h dargestellt. Die Phasenverschiebung Δ φ ist dabei auf 2 π bezogen, so daß aus dem Diagramm nach Figur 3 erkenntlich ist, wieviele Phasenverschiebungen vorliegen. Die Kurve 20 zeigt dabei den linearen Verlauf einer eindeutig zu messenden Phasenverschiebung von Δ $\varphi_{max1}$ = 360°. Die Kurve 21 hingegen zeigt den linearen Verlauf einer nicht mehr eindeutig zu messenden Phasenverschiebung mit einem Phasenhub von $\varphi_{max2}$. Aus Gründen der Eindeutigkeit ist der Meßeffekt nur in dem Bereich ausnutzbar, in welchem die maximale Phasenverschiebung $\varphi_{max}$ einen Vollwinkel (2 π) nicht überschreitet. Diese gewünschte Eindeutigkeit des Meßsignals läßt sich nur schwierig über eine gewünschte Erniedrigung der Schwingungsfrequenz lösen. Dabei würde die Frequenz f in den für das menschliche Ohr hörbaren Bereich gelangen und sollte deshalb bevorzugt im Bereich von 25 bis 35 kHz liegen.

Um eine eindeutige Signalzuordnung zu erhalten, sollte ferner der Unterschied zwischen der Schallgeschwindigkeit $c_M$ im Schalleiter und der Schallgeschwindigkeit $c_{MK}$ in dem diesen umgebenden Medium entsprechend klein gehalten werden. Dies ist leicht aus nachfolgender Formel zu ersehen :

$$\frac{\Delta \varphi_{max}}{2 \pi} = f \cdot \frac{L}{c_M} \left( \frac{c_M}{c_{MK}} - 1 \right) \leq 1$$

Für den Faktor $f \cdot \frac{L}{c_M}$ ergibt sich in der Praxis bei Verwendung einer Frequenz f = 30 kHz und einer Tanklänge L = 60 cm und $c_M$ = 2260 m/s ein typischer Wert von ca. 8, wie er auch in Figur 3 eingezeichnet ist.

In der Praxis eignen sich hierzu besonders Übertragungskörper aus Kupfer. Besonders vorteilhaft sind im Handel befindliche Kupfer-Lackdrähte mit einem Durchmesser von ca. 1 bis 2 mm, wie sie z.B. zur Herstellung von Spulen oder Trafos verwendet werden. Als Lackbeschichtung wird hierzu z.B. Tränklack verwendet. Die Schallgeschwindigkeit $c_M$ im Übertragungskörper wird nun nicht nur durch den inneren Kupferkörper sondern auch durch diese Lackbeschichtung mit beeinflußt. Ferner wirkt die Lackbeschichtung auch gleichzeitig dämpfend auf die im Schallkörper 11 möglichen Resonanzerscheinungen ein. Dies ist deshalb besonders vorteilhaft, da die Übertragungskörper bei den verwendeten Frequenzen der Schallwellen auch akustische Resonatoren darstellen. Abhängig von der füllstandsabhängigen Länge h können bei bestimmten angeregten Senderfrequenzen die Schalleiter in Resonanz kommen. Dies führt zu einem nicht mehr ganz linearen Phasenfrequenzgang mit periodischen Schwankungen, wie er in Figur 3 mit 22 bezeichnet ist. Der Kunststoffüberzug trägt dabei zu der für einen linearen Phasenverlauf notwendigen Dämpfung bei.

In Figur 4a ist eine homogene Beschichtung 25 des Schalleiters 11c dargestellt. Der Einfluß der den Schalleiter in konstanter Dicke umgebenden Beschichtung 25 auf die Schallgeschwindigkeit $c_M$ im Innern des Schalleiters 11c ist deshalb gleichmäßig über die gesamte Länge bzw. Füllstandshöhe h verteilt. Durch das Profil, den Querschnitt, das Material und das Überzugsmaterial des Schalleiters kann die Phasenverschiebung der Schallwellen so angepaßt werden, daß sich ein eindeutiges Meßsignal ergibt. Der Füllstandsanzeiger 12 kann somit in weiten Grenzen der Tankhöhe L und der Form des Tanks angepaßt werden.

Aus den Figuren 4b und 4c ist eine inhomogene Beschichtung des Schalleiters erkennbar. Dadurch kann der Verlauf des Phasengangs φ in bestimmten Bereichen der Füllstandshöhe h beeinflußt werden. Der bei unregelmäßiger Tankform bestehende nichtlineare Zusammenhang zwischen Füllhöhe h und vorhandenem Kraftstoffvolumen V, wobei letzteres bestimmt werden soll, kann drei so beeinflußt werden, daß ein linearer Verlauf des Phasengangs φ möglich ist. Hierzu wird z.B. im Bereich einer Ausbauchung des Tanks, also im Bereich eines gegenüber dem restlichen Volumen größeren Volumens des Mediums die Beschichtungsdicke erhöht. Durch die Beschichtung wird die Empfindlichkeit reduziert, wodurch der Phasenhub φ verringert wird und somit das Meßsignal dem geringeren Volumen angepaßt wird. Entsprechend der Ausbildung des Tanks kann der Schalleiter sowohl Verdünnungen als auch Verdickungen mit Hilfe des Beschichtungsmaterials 25 aufweisen.

Im Bereich der sogenannten Restmenge, des Reservebereichs, kann aber auch die Empfindlichkeit erhöht werden. Hierzu weist der aus Kupfer hergestellte Schalleiter 11c im Bereich 26 der Reservemenge keine Beschichtung auf, wie in Figur 4c dargestellt. Dadurch ist es möglich, mit Hilfe des Schalleiters 11c im beschichteten Bereich ein eindeutiges Meßsignal zu erzeugen und in einem kleinen Reservebereich den Meßbereich zusätzlich noch aufzuspreizen. Dieselbe Wirkung kann man auch mit einem Schalleiter 11d erreichen, der aus Abschnitten aus verschiedenen Materialien zusammengesetzt ist, wie in Figur 4d gezeigt. Das Material des Schalleiters 11c im Reservebereich 26 ist dabei auf hohe Meßempfindlichkeit abgestimmt, während das Material im restlichen Bereich auf ein eindeutiges Meßsignal ausgerichtet ist. Die Zusammensetzung aus verschiedenen Materialien kann aber auch auf eine beliebige Anzahl variiert werden, je nachdem, wie z.B. die Tankform gestaltet ist. Dadurch kann wieder ein linearer Meßkurvenverlauf erhalten werden, wie er in Figur 4b mit unterschiedlicher Beschichtungsdicke angestrebt wird.

## Patentansprüche

1. Füllstandsanzeiger (12), insbesondere für Kraftstoffbehälter (10) von Kraftfahrzeugen, der mit Hilfe eines Schallwellen aussendenden Senders (13) und eines Empfängers (14) und eines in den Behälter (10) in das zu bestimmende Medium ragenden Übertragungskörpers (11) mit vorgegebener Länge arbeitet, wobei das zu bestimmende Medium und das sich über dem zu bestimmenden Medium befindliche Medium unterschiedliche Schallimpedanz (Z) aufweisen und die in den Übertragungskörper (11) eingeleiteten Schallwellen Lambwellen sind, deren Fortpflanzungsgeschwindigkeit von dem den Übertragungskörper (11) jeweils umgebenden Medium abhängt, und für ein Meßsignal der Empfänger (14) die von der unterschiedlichen Füllstandshöhe (h) des zu bestimmenden Mediums abhängige Phasenverschiebung der Lambwellen erfaßt, die durch eine Verzögerung im zu bestimmenden Medium im Bereich des Übertragungskörpers (11) bewirkt wird, wobei der Übertragungskörper (11) aus Bereichen (11c, 11d, 25, 26) verschiedener Materialien besteht, die jeweils unterschiedliche Schalleiteigenschaften haben und wobei die Länge, Dicke und die Materialeigenschaften dieser Bereiche so aufeinander abgestimmt sind, daß die am Empfänger (14) ankommende Phasenverschiebung der Lambwellen maximal einen Vollwinkel (2 $\pi$) beträgt und somit einem eindeutigen Meßsignal zugeordnet werden kann.

2. Füllstandsanzeiger nach Anspruch 1, dadurch gekennzeichnet, daß ein Bereich des Übertragungskörpers (11) ein Grundkörper (11c) ist, der wenigstens teilweise mit einem schichtartigen Bereich (25), bestehend aus einem Material mit einer anderen Schalleiteigenschaft als das Material des Grundkörpers (11c, 26), umgeben ist.

3. Füllstandsanzeiger nach Anspruch 1, dadurch gekennzeichnet, daß ein Bereich des Übertragungskörpers (11) im Abschnitt einer Restmenge (26) des zu bestimmenden Mediums aus einem Material mit höherer Meßempfindlichkeit als im übrigen Meßbereich besteht.

4. Füllstandsanzeiger nach Anspruch 1, dadurch gekennzeichnet, daß die Bereiche aus verschiedenen Materialien in Längsrichtung des Übertragungskörpers (11) aneinander angeordnet sind.

5. Füllstendsanzeiger nach einem der Ansprüche 1 bis 4, dadurch gekennzeichnet, daß die Frequenz (f) der Schallwellen (17) im Ultraschallbereich liegt.

6. Füllstandsanzeiger nach einem der Ansprüche 1 bis 5, dadurch gekennzeichnet, daß der Übertragungskörper (11) ein Festkörper ist.

## Claims

1. Filling level indicator (12), particularly for motor vehicle fuel tanks (10), which operates with the aid of a transmitter (13) transmitting sound-waves and a receiver (14) and a transmission body (11) of prescribed length, protruding into the medium to be determined in the tank (10), the medium to be determined and the medium located above the medium to be determined exhibiting different sound impedance (Z) and the sound-waves being conducted into the transmission body (11) being Lamb waves, whose speed of propagation depends on the particular medium surrounding the transmission body (11), and the receiver (14) detecting for a measurement signal the phase shift in the Lamb waves dependent on the various filling levels (h) of the medium to be determined, the phase shift being caused by a delay within the medium being measured in the region of the transmission body (11), the transmission body (11) consisting of regions (11c, 11d, 25, 26) of different materials, which each have different sound conducting characteristics, and the length, thickness and the material properties of these regions being matched to one another in such a way that the maximum phase shift in the Lamb waves arriving at the receiver (14) is a full circle (2$\pi$) and consequently unambiguous measurement signal can be allocated.

2. Filling level indicator according to Claim 1, characterised in that a region of the transmission body (11) is a basic body (11c), which is surrounded at least in part by a layer type region (25), consisting of a material with a different sound conducting characteristic from the material of the basic body (11c, 26).

3. Filling level indicator according to Claim 1, characterised in that a region of the transmission body (11)

5

in the section of a residual quantity (26) of the medium to be determined consists of a material having higher measurement sensitivity than the rest of the measurement region.

4. Filling level indicator according to Claim 1, characterised in that the regions of different materials are arranged next to one another in the longitudinal direction of the transmission body (11).

5. Filling level indicator according to one of Claims 1 to 4, characterised in that the frequency (f) of the sound-waves (17) lies in the ultrasonic range.

6. Filling level indicator according to one of Claims 1 to 5, characterised in that the transmission body (11) is a solid body.

## Revendications

1. Indicateur de niveau (12), notamment pour le réservoir de carburant (10) de véhicules automobiles qui fonctionne à l'aide d'un émetteur (13) émettant des ondes sonores et d'un récepteur (14) et d'un corps de transmission (11) pénétrant dans le milieu à mesurer avec une longueur préétablie, le milieu à mesurer et le milieu se trouvant au-dessus du milieu à mesurer présentent des impédances sonores (Z) différentes et les ondes sonores introduites dans le corps de transmission (11) sont des ondes de Lamb, dont la vitesse de propagation dépend du milieu qui entoure le corps de transmission (11), et comme signal de mesure du récepteur (14), on capte le décalage de phase des ondes de Lamb fonction de la hauteur variable (h) de niveau du milieu à mesurer, qui est provoqué par un retard dans le milieu à mesurer dans la zone du corps de transmission (11) le corps de transmission (11) étant constitué de domaines (11c, 11d, 25, 26) de différents matériaux qui présentent des propriétés différentes de conductibilité du son et où la longueur, l'épaisseur et les propriétés des matériaux de ces domaines sont accordées, de sorte que le décalage de phase des ondes de Lamb aboutissant au récepteur (14) représente au plus un tour complet (2 $\pi$) et qu'on puisse faire correspondre ainsi un signal de mesure univoque.

2. Indicateur de niveau selon la revendication 1, caractérisé en ce qu'un domaine du corps de transmission (11) est un corps de base (11c) qui est entouré au moins partiellement d'un domaine (25) en couche, constitué d'un matériau ayant d'autres propriétés de conductibilité du son que celles du matériau du corps de base (11c, 26).

3. Indicateur de niveau selon la revendication 1, caractérisé en ce qu'un domaine du corps de transmission (11) dans la section de la réserve (26) du milieu à mesurer comprend un matériau de sensibilité de mesure supérieure à celle du reste de la plage de mesure.

4. Indicateur de niveau selon la revendication 1, caractérisé en ce qu'on dispose successivement les zones en matériaux différents dans le sens de la longueur du corps de transmission (11).

5. Indicateur de niveau selon l'une des revendications 1 à 4, caractérisé en ce que la fréquence (f) des ondes sonores (17) est dans le domaine des ultra-sons.

6. Indicateur de niveau selon l'une des revendications 1 à 5, caractérisé en ce que le corps de transmission (11) est un solide.

FIG.1

FIG.2

FIG.3

FIG.4A    FIG.4B    FIG.4C    FIG.4D